# EUROPEAN PATENT APPLICATION

(11) **EP 1 802 110 A2**
(43) Date of publication of application: **27.06.2007**
(21) Application number: 06124953.8
(22) Date of filing: 28.11.2006
(51) Int. Cl.: H04N 5/445

(54) **Method And Apparatus For Displaying Information On Broadcasting Contents**

(30) Priority: 23.12.2005 KR 20050128709
(71) Applicant: SAMSUNG ELECTRONICS CO., LTD., Suwon-si, Gyeonggi-do 442-742 (KR)
(72) Inventor: PARK, Sang-shin, Gyeonggi-do (KR); KIM, Deok-ho, Seoul (KR); CHO, Kang-myeong, Seoul (KR); KIM, Du-il, Gyeonggi-do (KR); CHANG, Ki-seok, Gyeonggi-do (KR); JEON, Yu-seong, Gyeonggi-do (KR); JUN, Hae-sik, Seoul (KR); CHOI, Sun-il, Gyeonggi-do (KR)
(74) Representative: Benson, Christopher

(57) **Abstract**

A method and apparatus for displaying information on broadcasting contents are provided. The method includes: storing (310) received information on an electronic program guide (EPG); generating (330) meta-data of recorded broadcasting contents based on the EPG information and storing the meta-data; and displaying (340) the EPG information and information on the recorded broadcasting contents based on the meta-data on a screen.

## Description

Methods and apparatuses consistent with the present invention relate to displaying information on broadcasting contents, and more particularly, to displaying information on recorded contents of digital broadcasting and electronic program guide (EPG) information.

In the fierce competition of personal computers (PC), set top boxes, and home gateways, personal video recorders (PVR) preoccupy a home network market as a home server. A PVR is a new digital recorder that records a broadcast signal on a hard disk or a memory chip and reproduces the broadcast signal, whereas video cassette recorders (VCR) store an image signal on a magnetic tape. The PVR stores a program sent by a broadcasting station and reproduces the program in the same way as the VCR, but the PVR and the VCR differ in that the PVR records broadcasting information on the hard disk, reproduces the broadcasting information using a file reproduction method like computers, and includes a memory chip with a central processing unit (CPU), an operating system (OS), and reproduction software, etc., whereby the hard disk stores broadcasting contents. Due to the development of digital broadcasting and the PVR, the demand for digital broadcasting recording has increased.

Hence, a method of effectively managing a large amount of recorded broadcasting contents is required. In particular, it is necessary to manage contents separately stored in the storage of several home devices in a home network environment. Meanwhile, a list used to display stored contents cannot effectively provide a user with characteristics or information about the recorded broadcasting contents that are continuously changing.

According to the present invention there is provided an apparatus and method as set forth in the appended claims. Preferred features of the invention will be apparent from the dependent claims, and the description which follows.

In one aspect of the invention, a PVR that receives and records digital broadcasting and records the digital broadcasting provides the user with electronic program guide (EPG) information and information on the contents separately stored in the storage so that the user can easily select or manage the contents.

The exemplary embodiment of the present invention provides a method and apparatus for displaying information on broadcasting contents to provide a user with information on the contents of a personal video recorder (PVR) that receives and records digital broadcasting in a user-friendly manner.

According to first aspect of the present invention, there is provided a method of displaying information on broadcasting content, the method comprising: receiving information on an electronic program guide (EPG); and displaying the EPG information and information on at least one recorded broadcasting contents on a screen.

The information on the at least one recorded broadcasting contents may be displayed in a same manner of displaying the EPG information.

Preferably, the information on the at least one recorded broadcasting contents stored in at least one remote storing medium connected to a network, is displayed on the screen.

The information on the at least one remote storing medium may be displayed on the screen.

The meta-data and EPG information corresponding to a display scope may be displayed on the screen.

According to a second aspect of the present invention, there is provided an apparatus for displaying information on broadcasting contents, the apparatus comprising: an EPG receiving unit which receives information on an electronic program guide (EPG); and a display unit which displays the EPG information and information on at least one recorded broadcasting contents on a screen.

The display unit may display information on the recorded broadcasting contents in a same manner of displaying the EPG information.

Preferably, the display unit displays information on the at least one recorded broadcasting contents stored in at least one remote storing medium connected to a network on the screen.

The display unit may display information on the at least one remote storing medium on the screen.

Preferably, the display unit extracts meta-data and EPG information corresponding to a designated display scope on the screen.

According to a further aspect of the present invention, there is provided a computer readable medium having embodied thereon a computer program for executing a method, the method comprising: receiving information on an electronic program guide (EPG); and displaying the EPG information and information on at least one recorded broadcasting contents on a screen.

For a better understanding of the invention, and to show how embodiments of the same may be carried into effect, reference will now be made, by way of example, to the accompanying diagrammatic drawings in which:
Figure 1 is a block diagram illustrating an apparatus for displaying information on broadcasting contents according to an exemplary embodiment of the present invention;
Figures 2A and 2B illustrate conceptual diagrams of an apparatus and a method for displaying information on broadcasting contents, according to exemplary embodiments of the present invention; and
Figure 3 is a flowchart illustrating a method of displaying information on broadcasting contents according to an exemplary embodiment of the present invention.

The present invention will now be described more fully with reference to the accompanying drawings.

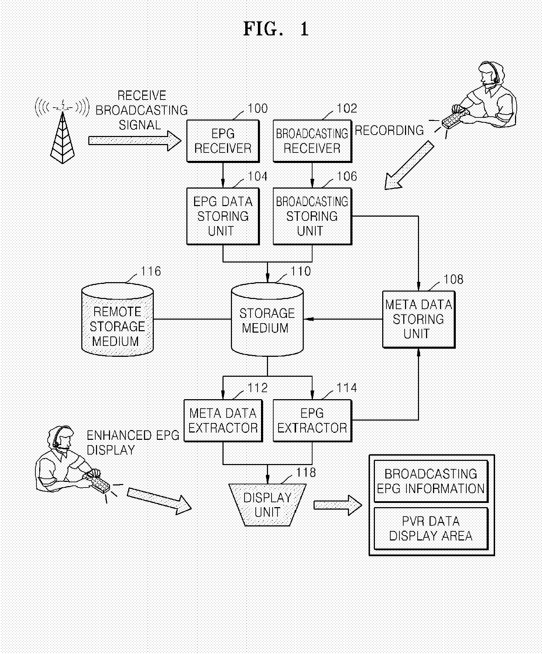

Figure 1 is a block diagram illustrating an apparatus for displaying information on broadcasting contents according to an exemplary embodiment of the present invention. Referring to Figure 1, the apparatus for displaying information on broadcasting contents comprises an electronic program guide (EPG) receiver 100, a broadcasting receiver 102, an EPG data storing unit 104, a broadcasting storing unit 106, a meta data storing unit 108, a storage medium 110, a meta data extractor 112, an EPG extractor 114, a remote storage medium 116, and a display unit 118.

The EPG receiver 100 receives EPG information included in a broadcasting signal. The EPG data storing unit 104 stores the EPG information.

The broadcasting receiver 102 receives broadcasting contents included in the broadcasting signal. The broadcasting storing unit 106 stores the broadcasting contents according to a user's recording command.

The meta data storing unit 108 generates meta-data which is information on the broadcasting contents and stores the meta-data. The meta data includes information such as titles, actors, genre, etc. of the broadcasting contents included in the EPG information, and information such as a recording time, a recorded time, etc., obtained from a recording process.

That is, the meta data storing unit 108 generates the meta-data regarding recorded broadcasting contents based on the EPG information and stores the meta-data. In particular, the meta-data can be converted into an XML file.

Examples of acquiring EPG information and generating the meta data are that the meta data storing unit 108 receives the EPG information from the EPG receiver 100, the EPG data storing unit 104, or the EPG extractor 114, as illustrated in Figure 1. However, the exemplary embodiment of the present invention is not limited thereto.

The storage medium 110 finally stores contents stored in the EPG data storing unit 104, the broadcasting storing unit 106, and the meta data storing unit 108.

The meta data extractor 112 and the EPG extractor 114 extract the meta-data and the EPG information to be displayed by the display unit 118. The display unit 118 can display information on the entire recorded broadcasting contents using the entire meta-data and the EPG information stored in the storage medium 110 or can display part of the information on the broadcasting contents. In the latter method, if the user designates a scope of the broadcasting contents and EPG information that the user wishes to display, the meta data extractor 112 and the EPG extractor 114 extract meta-data and EPG information from the designated broadcasting contents, and then the display unit 118 displays the extracted contents. The user designates a display scope by limiting a display channel to specific channels, a recording time, genre, title, etc. However, the exemplary embodiment of the present invention is not limited thereto.

The display unit 118 displays information on the recorded broadcasting contents using the extracted meta-data, and displays the extracted EPG information. In particular, the information on the recorded broadcasting contents and the EPG information are displayed on a screen so that the user can easily and conveniently select or determine the contents. Also, the display unit 118 does not use a list that simply arranges the information on the recorded broadcasting contents but uses a table in an EPG display manner so that multiple pieces of information on the broadcasting contents can be provided to the user.

The EPG information is stored in a storing medium and is updated regularly or according to a user's EPG update command. The broadcasting contents and the information on the broadcasting contents are stored in the storing medium according to a user's instant recording or scheduled recording.

At least one remote storage medium 116 is connected to a network, and stores recorded contents according to another exemplary embodiment of the present invention. A meta-data receiver (not shown) receives meta-data corresponding to the recorded broadcasting contents from the remote storage medium 116, and provides the meta-data to the meta data extractor 112. The meta data extractor 112 extracts meta-data corresponding to the display scope designated by the user from the meta-data received from the remote storage medium 116 and displays the extracted meta-data as described above. In particular, information on the remote storage medium 116 providing the meta-data is displayed on the screen. Some examples of information on the remote storage medium 116 are an identifier, a name, a location of the remote storage medium 116, etc. However, the exemplary embodiment of the present invention is not limited thereto.

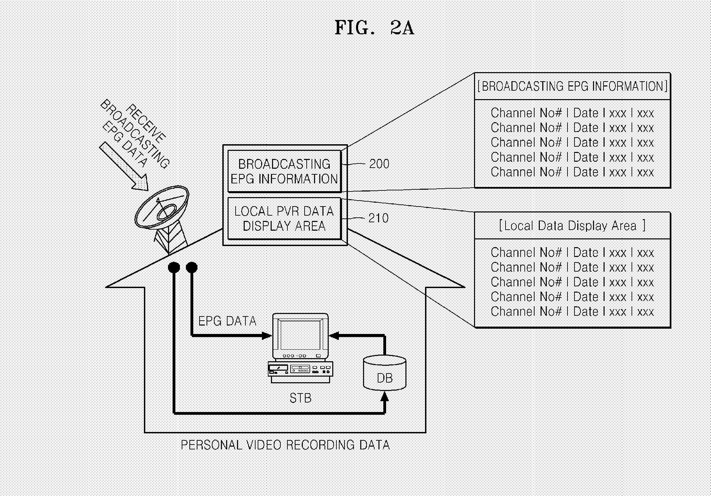

Figure 2A illustrates a conceptual diagram of an apparatus and a method of displaying information on broadcasting contents using a personal video recorder (PVR) according to an exemplary embodiment of the present invention. Referring to Figure 2A, a screen is divided into regions 200 and 210 that display broadcasting EPG information and information on recorded contents, respectively. Each of the regions 200 and 210 includes information on contents and the broadcasting EPG information corresponding to a display scope designated by a user, and a field such as a channel number, data, etc.

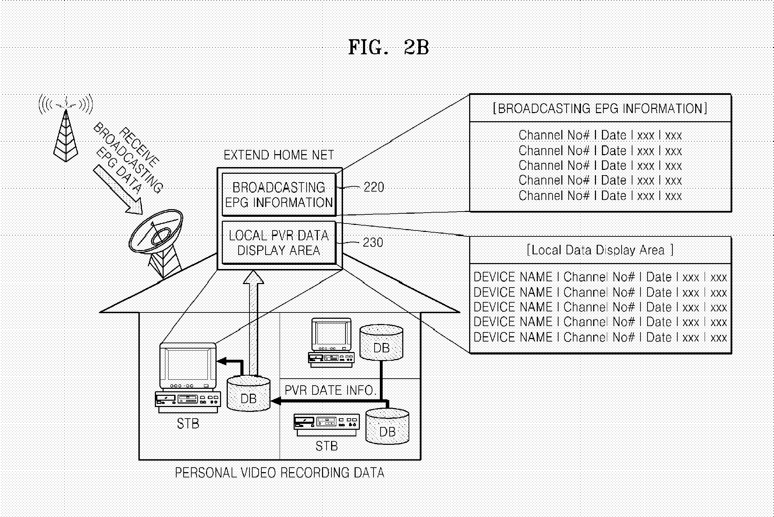

Figure 2B illustrates a conceptual diagram of an apparatus and a method of displaying information on broadcasting contents using a plurality of PVRs or a PVR and a recorded broadcasting contents storing medium connected to a network, according to an exemplary embodiment of the present invention.

Referring to Figure 2B, a screen is divided into regions 220 and 230 that display broadcasting EPG information and information on recorded broadcasting contents, respectively, as illustrated in Figure 2A. However, the current exemplary embodiment is different from the previous exemplary embodiment in that the region 230 includes information on contents stored in another device connected to the network, and a name of the device.

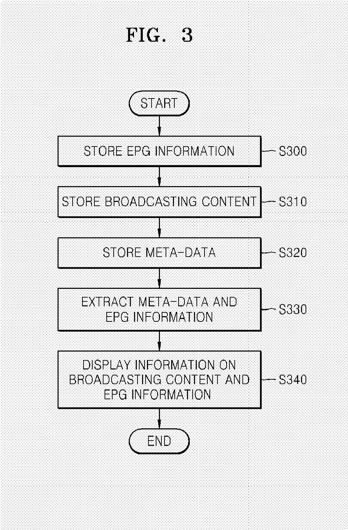

Figure 3 illustrates a flowchart of a method of displaying information on broadcasting contents according to an exemplary embodiment of the present invention. Referring to Figure 3, EPG information included in a broadcasting signal is received and stored (Operation 300).

Broadcasting contents included in the broadcasting signal is received and broadcasting contents received according to a user's recording command is stored (Operation 310). The order of Operations 300 and 310 can be changed as would be obvious to one of ordinary skill in the art.

Meta-data, which is information on the stored broadcasting contents, are generated and stored (Operation 320). Information included in the meta-data and a method of generating the meta-data are described above and thus their descriptions will be omitted.

Meta-data and EPG information corresponding to a display scope designated by a user are extracted (Operation 330). The display scope designated by the user is described above and thus its description will be omitted.

Information on recorded broadcasting contents are displayed on a screen based on the extracted meta-data, and the extracted EPG information is displayed on the screen (Operation 340).

Another method of displaying information on broadcasting contents according to another exemplary embodiment of the present invention will now be described. When a plurality of storing media store the recorded broadcasting contents, meta-data is received from a remote storing medium connected to a network before Operation 330 is performed. Information on contents stored in the remote storing medium based on the received meta-data and information on the remote storing medium are displayed in Operation 340.

The exemplary embodiment of the present invention can also be embodied as computer readable code on a computer readable recording medium. The computer readable recording medium is any data storage device that can store data that can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be a distributed network coupled computer systems so that the computer readable code is stored and executed in a distributed fashion. Also, functional programs, codes and code segments for accomplishing the exemplary embodiment of the present invention can be easily construed by a programmer skilled in the art to which the present invention pertains.

According to the exemplary embodiment of the present invention, not a conventional list but a user-friendly EPG display method is used to display recorded broadcasting contents on a screen and provide an EPG, thereby effectively displaying characteristics of broadcasting contents. Also, information on contents separately stored in a plurality of storing media connected to a network is displayed on a screen, thereby easily observing and managing distributed contents.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying information on broadcasting content, the method comprising:
receiving information on an electronic program guide (EPG); and
displaying (340) the EPG information and information on at least one recorded broadcasting contents on a screen.

2. The method of claim 1, wherein the information on the at least one recorded broadcasting contents is displayed in a same manner of displaying the EPG information.

3. The method of claim 1 or 2, wherein the EPG information and the information on the at least one recorded broadcasting contents are displayed in a table (200, 210, 220, 230) arrangement.

4. The method of claim 1, 2 or 3 wherein the information on the at least one recorded broadcasting contents is based on meta-data of the at least one recorded broadcasting contents.

5. The method of claim 4, wherein the meta-data is extracted (330) from the EPG information corresponding to the at least one recorded broadcasting contents.

6. The method of any preceding claim, wherein information on the at least one recorded broadcasting contents stored in at least one remote storing medium (116) connected to a network, is displayed on the screen.

7. The method of claim 6, wherein information regarding the at least one remote storing medium (116) is displayed on the screen.

8. The method of any preceding claim, wherein meta-data and EPG information corresponding to a designated display scope are displayed on the screen.

9. An apparatus for displaying information on broadcasting contents, the apparatus comprising:
an EPG receiving unit (100) which receives information on an electronic program guide (EPG); and
a display unit (118) which displays the EPG information and information on at least one recorded broadcasting contents on a screen.

10. The apparatus of claim 9, wherein the display unit (118) displays information on the at least one recorded broadcasting contents in a same manner of displaying the EPG information.

11. The apparatus of claim 9 or 10, wherein the EPG information and the information on the at least one recorded broadcasting contents are displayed in a table (200, 210, 220, 230) arrangement.

12. The apparatus of any of claims 9 to 11, wherein the information on the at least one recorded broadcasting contents is based on meta-data of the at least one recorded broadcasting contents.

13. The apparatus of claim 12, wherein the meta-data is extracted from the EPG information corresponding to the at least one recorded broadcasting contents.

14. The apparatus of any of claims 9 to 13, wherein the display unit (118) displays information on the at least one recorded broadcasting contents stored in at least one remote storing medium (116) connected to a network on the screen.

15. The apparatus of claim 14, wherein the display unit (118) displays information on the at least one remote storing medium (116) on the screen.

16. The apparatus of any of claims 9 to 15, wherein the display unit displays meta-data and EPG information corresponding to a designated display scope on the screen.

17. A computer readable medium having embodied thereon a computer program for executing a method, the method comprising:
receiving information on an electronic program guide (EPG); and
displaying (340) the EPG information and information on at least one recorded broadcasting contents on a screen.

18. The computer readable medium of claim 17, wherein the information on the at least one recorded broadcasting contents is displayed in a same manner of displaying the EPG information.
